Europäisches Patentamt

European Patent Office

Office européen des brevets

(11) Veröffentlichungsnummer : **0 493 316 A1**

## (12) EUROPÄISCHE PATENTANMELDUNG

(21) Anmeldenummer : **91810949.7**

(22) Anmeldetag : **06.12.91**

(51) Int. Cl.$^5$ : **F16L 47/02, F16L 47/00**

(30) Priorität : **20.12.90 CH 4068/90**

(43) Veröffentlichungstag der Anmeldung :
**01.07.92 Patentblatt 92/27**

(84) Benannte Vertragsstaaten :
**AT BE CH DE DK ES FR GB GR IT LI LU NL SE**

(71) Anmelder : **Geberit AG**
**Schachenstrasse 77**
**CH-8645 Jona (CH)**

(71) Anmelder : **PABRECO S.A.**
**32, route de Fribourg**
**CH-1723 Marly (CH)**

(72) Erfinder : **Dolder, René**
**Eichwiesstrasse 29**
**CH-8645 Jona (CH)**
Erfinder : **Etter, Bruno**
**Pestalozzistrasse**
**CH-8865 Bilten (CH)**

(74) Vertreter : **Groner, Manfred et al**
**Patentanwalts-Bureau Isler AG Postfach 6940**
**CH-8023 Zürich (CH)**

(54) **Vorrichtung zum Verbinden eines schweissbaren Kunststoff- oder Verbundrohres mit einem weiteren Leitungsteil.**

(57)   Ein Fitting (21) ist an einem Ende mit einem Gewinde (22) zum Anschluss beispielsweise einer Armatur versehen. Am anderen Ende ragt der Fitting in eine Schweissmuffe (25), die mit einem Leitungsrohr verschweissbar ist, das auf dieses Ende aufgeschoben ist. Der Fitting (21) und die Schweissmuffe (25) sind separat hergestellt und mittels Ultraschallschweiss miteinander verbunden.

Fig. 2

Die Erfindung betrifft eine Vorrichtung nach dem Oberbegriff des unabhängigen Patentanspruchs 1. Eine bekannte Vorrichtung dieser Art weist eine im Spritzgussverfahren hergestellte Schweissmuffe auf, in die ein Messinggussteil mit freiliegendem Anschlussgewinde sowie ein Widerstandsheizdraht eingegossen sind. Gegenüber einer Pressverbindung, wie sie beispielsweise aus der EP-A-0 343 395 bekannt ist, ist eine solche Verbindung wesentlich montagefreundlicher und sicherer. Als nachteilig wird hier jedoch angesehen, dass die Herstellung der für die Verbindung erforderliche Schweissmuffe aufwendig und somit teuer ist.

Der Erfindung liegt die Aufgabe zugrunde, eine Vorrichtung der genannten Art zu schaffen, die einfacher und kostengünstiger herzustellende Verbindungteile aufweist und die dennoch funktionssicher ist. Die Aufgabe wird durch die Erfindung gemäss Anspruch 1 gelöst.

Die erfindungsgemässe Vorrichtung weist eine Schweissmuffe und einen Fitting auf, die separat auch in unterschiedlichen Grössen sehr einfach hergestellt werden können. Der Schweissmuffenkörper kann von einem Rohr aus thermoplastischem Kunststoff abgeschnitten und der Widerstansheizdraht kann in bekannter Weise in Nuten auf der Innenseite des Muffenkörpers eingelegt werden. Teure Spritzgusswerkzeuge sind nicht erforderlich. Der Fitting mit einem Gewinde oder einem anderen Anschluss lässt sich ebenfalls sehr kostengünstig beispielsweise aus Messing herstellen.

Die Schweissmuffe wird mit der Aussenseite des Kunststoffoder Verbundrohres verschweisst, während der Fitting mit einem Ende in das Kunststoff- oder Verbundrohr eingreift und die Rohrinnenseite gegen den Fitting abdichtet. Dies ermöglicht eine feste und dennoch dichte Verbindung des Fitting mit dem Kunststoff- oder Verbundrohr. Die Vorrichtung eignet sich besonders für Wasserleitungen, und insbesondere für den Anschluss von Armaturen an Verbundrohrleitungen.

Weitere vorteilhafte Merkmale ergeben sich aus den übrigen Ansprüchen und der nachfolgenden Beschreibung.

Ausführungsbeispiele der Erfindung werden nachfolgend anhand der Zeichnung näher erläutert. Es zeigen:

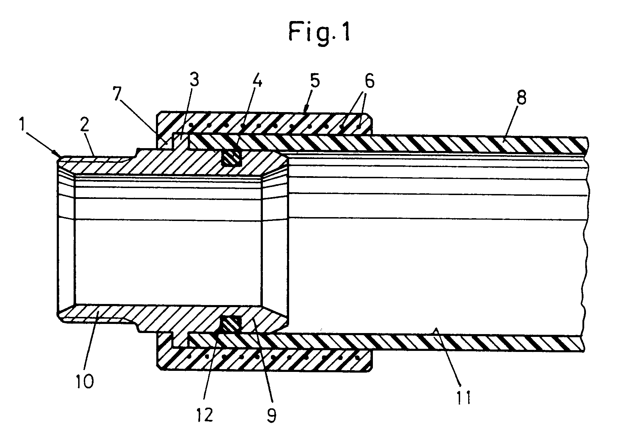

Fig. 1 ein Längsschnitt durch eine erfindungsgemässe Vorrichtung, und

Fig. 2 bis 4 Längsschnitte durch drei weitere Ausführungsbeispiele der erfindungsgemässen Vorrichtung.

Ein Gewindeteil 1 aus Messing weist ein Aussengewinde 2 für den Anschluss eines hier nicht gezeigten Leitungsteils auf und ist mittels einer ebenfalls zylindrischen Schweissmuffe 5 fest mit einem Rohr 8 verbunden. Das Rohr 8 ist beispielsweise ein Kunststoffrohr aus einem thermoplastischem Kunststoff, oder ein Verbundrohr. Ein besonders geeignetes Verbundrohr weist einen Aluminiumkern, eine Aussenschicht aus einem thermoplastischem Kunststoff sowie eine Innenschicht aus beispielsweise vernetztem Polyäthylen auf.

Die Schweissmuffe 5 weist einen Widerstandsheizdraht 6 auf, der in bekannter Weise in hier nicht gezeigte Nuten auf der Innenseite eingelegt ist und dessen Enden zum Anschluss an eine elektrische Stromquelle nach aussen geführt sind. Am einen Ende weist die Schweissmuffe 5 einen Innenflansch 7 auf, der an einem ringförmigen Vorsprung 3 des Gewindeteils 1 anliegt. Dieser Vorsprung 3 bildet einen Anschlag für das in die Schweissmuffe 5 eingeschobene Rohr 8 begrenzt damit die Einschubtiefe des Rohres 8 in der Schweissmuffe 5. Der Gewindeteil 1 ist somit formschlüssig mit der Schweissmuffe 5 und nach dem Verschweissen fest mit dem Rohr 8 verbunden.

Der Gewindeteil 1 ist mit einem Ende 9 bis zum Vorsprung 3 in das Rohr 8 eingesetzt. Ein in eine Nut 12 eingelegter Dichtungsring 4 aus gummielastischem Material liegt flüssigkeitsdicht an der Innenseite 11 des Rohre 8 an.

Bei der erfindungsgemässen Verbindung dient die Schweissmuffe 5 somit für die feste Verbindung des Gewindeteils 1 mit dem Rohr 8, während der Gewindeteil 1 die Dichtigkeit der Verbindung gewährleistet.

Zur Herstellung der Verbindung wird der Gewindeteil 1 mit dem Ende 9 bis zum Vorsprung 3 in das Rohr 8 eingesetzt. Anschliessend wird die Schweissmuffe 5 bis zum Anschlag des Flansches 7 am Vorsprung 3 auf das Rohr 8 aufgeschoben und in bekannter Weise mit diesem verschweisst. Schliesslich wird auf den Gewindeteil 1 ein hier nicht gezeigter Leitungsteil, beispielsweise eine Armatur oder ein weiteres Rohr aufgeschraubt.

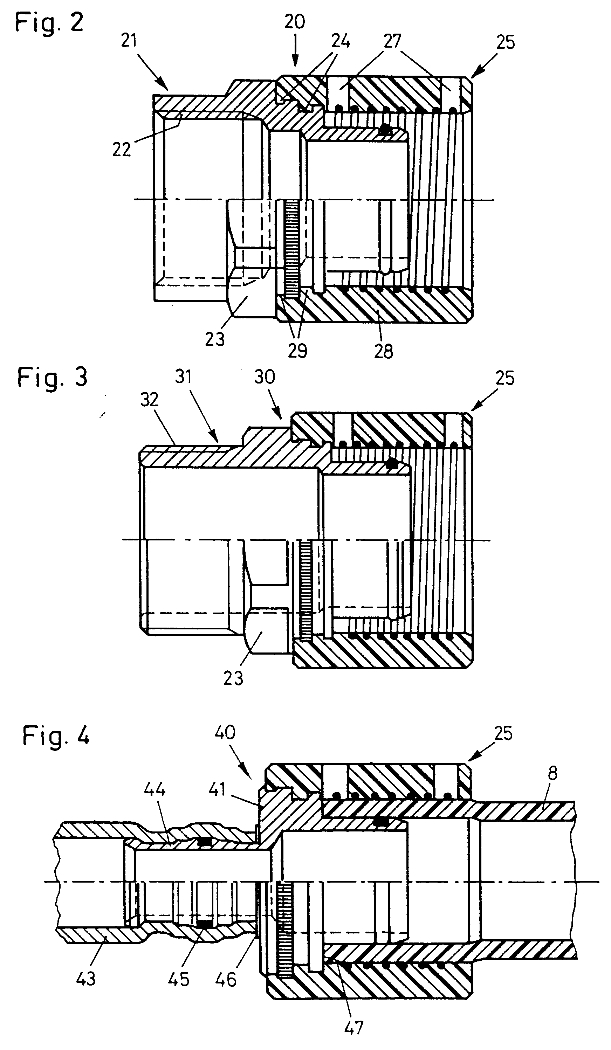

In Figur 2 ist eine Vorrichtung 20 gezeigt, die einen Fitting 21 mit einem Innengewinde 22 und eine Schweissmuffe 25, in die ein Heizdraht 26 eingelegt ist, aufweist. Zum Verschweissen der Muffe 25 mit einem hier nicht gezeigten Leitungsrohr wird der Heizdraht 26 durch Oeffnungen 27 im Muffenkörper 28 mit einer Stromquelle verbunden.

Der Fitting 21 ist anschliessend an einen Aussensechskant 23 mit zwei umlaufenden Fugen 24 versehen, in die korrespondierende Rippen 29 der Schweissmuffe 25 eingreifen. Das mit den Rippen 29 versehene Ende der Schweissmuffe 25 ist wie gezeigt auf den Fitting 21 unter vorübergehender radialer Aufweitung aufgeschoben und durch Ultraschallschweissung fest mit dem Fitting 21 verbunden.

Die Vorrichtung nach Fig. 3 unterscheidet sich von derjenigen nach Fig. 2 im wesentlichen dadurch, dass ein Fitting 31 mit einem Aussengewinde 32 versehen ist. Dieser ist in oben erwähnter Weise mittels Ultraschallschweissung mit einer Schweissmuffe 25 verbunden. Für unterschiedliche Fittings 21 und 31 können somit die

2

gleichen Schweissmuffen 25 verwendet werden.

In der Vorrichtung gemäss Fig. 4 weist ein Fitting 41 einen Anschluss-Stutzen 44 auf, auf den ein Verbundrohr 43 aufgesetzt und mittels radialer Verpressung festgelegt ist. Ein Dichtungsring 45 gewährleistet die Dichtigkeit dieses Anschlusses. Eine flache Scheibe 46, die stirnseitig am Verbundrohr 43 sowie am Fitting 41 anliegt, schützt das Verbundrohr 43 an seiner Schnittfläche. Eine entsprechende Scheibe 47 ist hier auch zwischen das Rohr 8 und den Fitting 41 gelegt. Auch dieser Fitting 41 ist mit einer bereits oben beschriebenen Schweissmuffe verbunden. Mit der erfindungsgemässen Vorrichtung können somit Rohre 8 und 43 mit unterschiedlichen Weiten verbunden werden. Ebenfalls können Kunststoffrohre 8 mit Armaturen verbunden werden, wobei lediglich Fittings mit den entsprechenden Aussen- oder Innengewinden hergestellt werden müssen.

## Patentansprüche

1. Vorrichtung zum Verbinden eines schweissbaren Kunststoff- oder Verbundrohres (8) mit einem weiteren Leitungsteil (43), mit einer Schweissmuffe (5,25) zum Anschliessen des schweissbaren Rohres (8) und einem Fitting (1) zum Anschliessen des weiteren Leitungsteils (43), dadurch gekennzeichnet, dass die Schweissmuffe (5,25) und der Fitting (1,21,31,41) separat hergestellt und miteinander verbunden sind, dass der Fitting (1,21,31,41) an einem in die Schweissmuffe (5) eingreifenden Ende (9) Dichtmittel (4) aufweist, die zur Anlage an der Innenseite des schweissbaren Rohres (8) bestimmt sind und dass die Schweissmuffe (5,25) an ihrer Innenseite mit der Aussenseite des Kunststoff- oder Verbundrohres (8) verschweissbar ist.

2. Vorrichtung nach Anspruch 1, dadurch gekennzeichnet, dass die Schweissmuffe (5) an einem Ende einen Innenflansch (7) aufweist, der an einem ringförmigen Vorsprung (3) des Fittings (1) anliegt, wobei der ringförmige Vorsprung (3) einen Anschlag für das Kunststoff- oder Verbundrohr (8) bildet.

3. Vorrichtung nach Anspruch 2, dadurch gekennzeichnet, dass der ringförmige Vorsprung (3) etwa mittig auf der Aussenseite des Fittings (1) angeordnet ist.

4. Vorrichtung nach Anspruch 1, dadurch gekennzeichnet, dass die Schweissmuffe (25) mittels Ultraschallschweissung mit dem Fitting (21,31,41) verbunden ist.

5. Vorrichtung nach Anspruch 1 oder 4, dadurch gekennzeichnet, dass die Schweissmuffe (25) innenseitig Rippen (29) aufweist, die in korrespondierende Fugen (24) des Fittings (21) eingreifen.

6. Vorrichtung nach Anspruch 1, dadurch gekennzeichnet, dass der Fitting (41) Stutzen (44) für eine Pressverbindung aufweist.

# Fig.1

Fig. 2

Fig. 3

Fig. 4

**Europäisches Patentamt**

## EUROPÄISCHER RECHERCHENBERICHT

Nummer der Anmeldung

EP    91 81 0949

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 378 406 (OSAKA GAS CO. LTD. ET AL.) <br> * Zusammenfassung; Abbildungen 7-12 * <br> * Spalte 16, Zeile 29 - Spalte 17, Zeile 11 * <br> * Spalte 20, Zeile 5 - Spalte 20, Zeile 28 * | 1-4 | F16L47/02 <br> F16L47/00 |
| A | | 5 | |
| A | FR-A-2 282 084 (MAIN-GASWERKE AG ET MANNESMANN AG) <br> * Seite 3, Zeile 3 - Seite 3, Zeile 25; Abbildungen 1,2 * <br> * Seite 4, Zeile 4 - Seite 4, Zeile 7 * | 1,2,4 | |
| A | FR-A-2 538 876 (ETABLISSEMENTS DOYER) <br> * Seite 4, Zeile 6 - Seite 4, Zeile 26; Abbildung 2 * | 1 | |
| A | DE-A-1 450 408 (SUPERFLEXIT LTD.) <br> * Abbildungen * | 1-3 | |

RECHERCHIERTE SACHGEBIETE (Int. Cl.5)

F16L

Der vorliegende Recherchenbericht wurde für alle Patentansprüche erstellt

| Recherchenort | Abschlußdatum der Recherche | Prüfer |
|---|---|---|
| DEN HAAG | 25 MAERZ 1992 | NEUMANN E. |